Europäisches Patentamt

**European Patent Office**

**Office européen des brevets**

(19)

(11) Numéro de publication: **0 202 987**
**B1**

# FASCICULE DE BREVET EUROPEEN

(12)

(45) Date de publication du fascicule du brevet:
**06.12.89**

(21) Numéro de dépôt: **86400903.0**

(22) Date de dépôt: **24.04.86**

(51) Int. Cl.⁴: **G02B 27/00**

(54) **Dispositif de transport et de combinaison d'images lumineuses, et son utilisation pour un viseur de casque.**

(30) Priorité: **03.05.85 FR 8506770**

(43) Date de publication de la demande:
**26.11.86 Bulletin 86/48**

(45) Mention de la délivrance du brevet:
**06.12.89 Bulletin 89/49**

(84) Etats contractants désignés:
**DE GB IT SE**

(56) Documents cités:
**EP-A- 0 064 899**
**FR-A- 2 522 804**
**US-A- 4 447 128**

(73) Titulaire: **THOMSON-CSF, 51, Esplanade du Général de Gaulle, F-92800 Puteaux(FR)**

(72) Inventeur: **Migozzi, Jean-Blaise, THOMSON-CSF SCPI 19, avenue de Messine, F-75008 Paris(FR)**
Inventeur: **Grasdepot, François, THOMSON-CSF SCPI 19, avenue de Messine, F-75008 Paris(FR)**

(74) Mandataire: **Trocellier, Roger et al, THOMSON-CSF SCPI, F-92045 PARIS LA DEFENSE CEDEX 67(FR)**

## Description

La présente invention concerne un dispositif de transport d'une première image lumineuse à l'aide d'un câble optique et sa combinaison avec une deuxième image lumineuse pour permettre l'observation combinée des deux images. L'utilisation de l'invention est plus particulièrement envisagée dans le domaine des viseurs de casques pour l'observation d'un réticule de tir ou d'une image synthétique en superposition avec la vision du paysage extérieur.

On entend par câble optique un faisceau ordonné de fibres optiques, c'est-à-dire un faisceau formé par un ensemble de fibres conductrices de lumière disposé de façon que les extrémités correspondant à une même fibre sont situées en des positions homologues en x et en y sur les deux faces terminales planes du faisceau. Le rangement homologue des fibres à chaque extrémité permet le transport d'image.

Il résulte, d'après la constitution même d'un faisceau ordonné que, si une image est formée par un objectif optique sur une face plane d'extrémité, l'énergie lumineuse est transmise par les fibres point par point et se retrouve ordonnée de la même manière à l'autre extrémité pour y reformer l'image lumineuse, aux pertes de transmission près. Lorsque l'image de sortie est destinée à l'observation visuelle, celle-ci s'effectue généralement à travers un oculaire ou une loupe pour bénéficier d'un grossissement car les dimensions du câble sont relativement faibles. Suivant une autre utilisation, l'image de sortie est transportée par l'optique de sortie sur une cible photoréceptrice d'un tube de prise de vue de télévision, ou sur une matrice en dispositif à transfert de charge.

Ces dispositifs présentent des inconvénients résultant du regroupement en x et y des fibres du câble ce qui se traduit par un effet de trame. Pour remédier à cet inconvénient ainsi qu'à ceux qui résultent des coupures de fibres, il est connu par le document de brevet FR-A-2 504 758 (ou EP-A-0 064 899), un dispositif de transport d'image lumineuse par câble optique dans lequel des moyens sont prévus pour supprimer l'effet de trame, ces moyens consistant en un premier prisme déviateur qui est disposé en amont de l'objectif d'entrée et qui assure une dispersion du rayonnement en fonction des différentes longueurs d'onde, en sorte que le rayonnement correspondant à un point de l'image se trouve focalisé par l'objectif d'entrée sur plusieurs fibres de la face d'entrée du câble optique. De manière homologue la face de sortie est suivie d'un objectif de sortie pour permettre l'observation de l'image et cet objectif de sortie est lui-même suivi d'un deuxième élément prismatique pour fusionner inversement les rayonnements sortants et reformer l'image.

Le but de l'invention est de perfectionner cette technique de transport d'image en utilisant comme moyen de dispersion des optiques holographiques et en assurant en outre une présentation combinée de l'image transportée par le câble en surimpression avec une autre image, par exemple la vision du paysage extérieur comme c'est le cas pour un viseur de casque.

Dans les collimateurs de pilotage portés par un casque ou non, la vision combinée d'images s'effectue généralement à l'aide d'un miroir partiellement transparent. Il est connu également d'utiliser un miroir holographique assurant cette fonction mais au détriment d'aberrations chromatiques importantes nécessitant des formules optiques correctives.

Dans la solution proposée ces défauts sont éliminés du fait que l'on utilise un élément holographique de sortie homologue de celui d'entrée et qui assure la fonction inverse ce qui supprime les aberrations chromatiques introduites par le miroir d'entrée.

Les particularités et avantages de la présente invention apparaîtront dans la description qui suit donnée à titre d'exemple à l'aide des figures annexées qui représentent :

- Figure 1, un schéma général d'un dispositif de transport et de combinaison d'images lumineuses conforme à l'invention,
- Figure 2, un schéma de détail d'une variante de réalisation du dispositif selon la figure 1,
- Figure 3, un schéma partiel du dispositif selon la figure 1 pour montrer l'effet dispersif du miroir d'entrée,
- Figure 4, des courbes de réponse définissant les bandes spectrales des éléments holographiques utilisés dans le montage de la figure 1,
- Figure 5, une variante de réalisation du montage selon la figure 1,
- Figure 6, un schéma d'une utilisation sur un viseur de casque du dispositif représenté sur la figure 1.

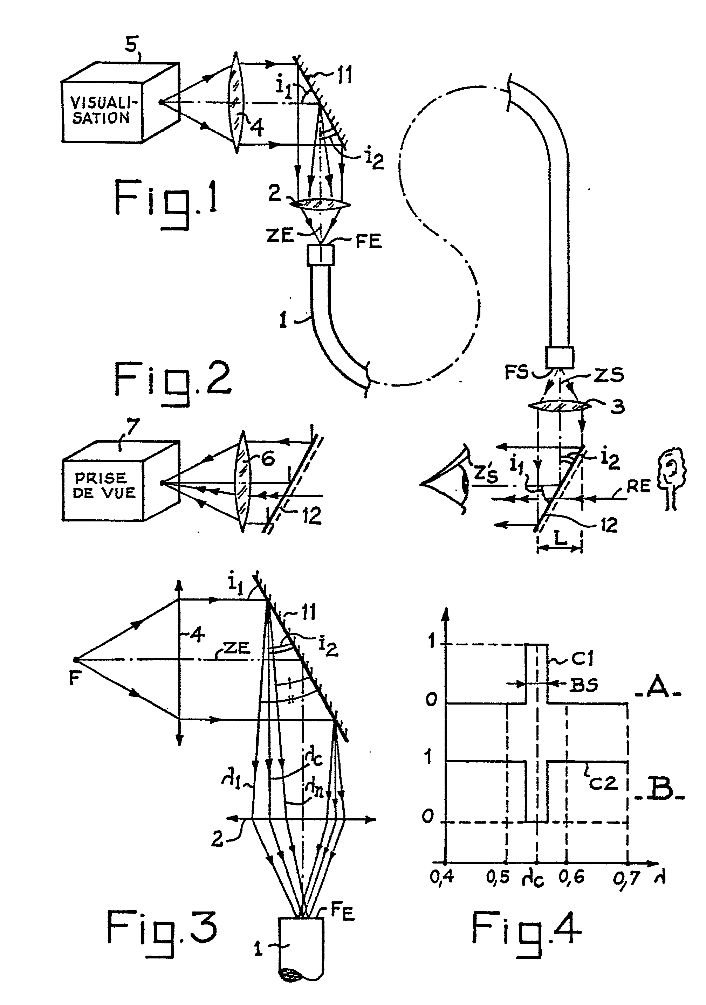

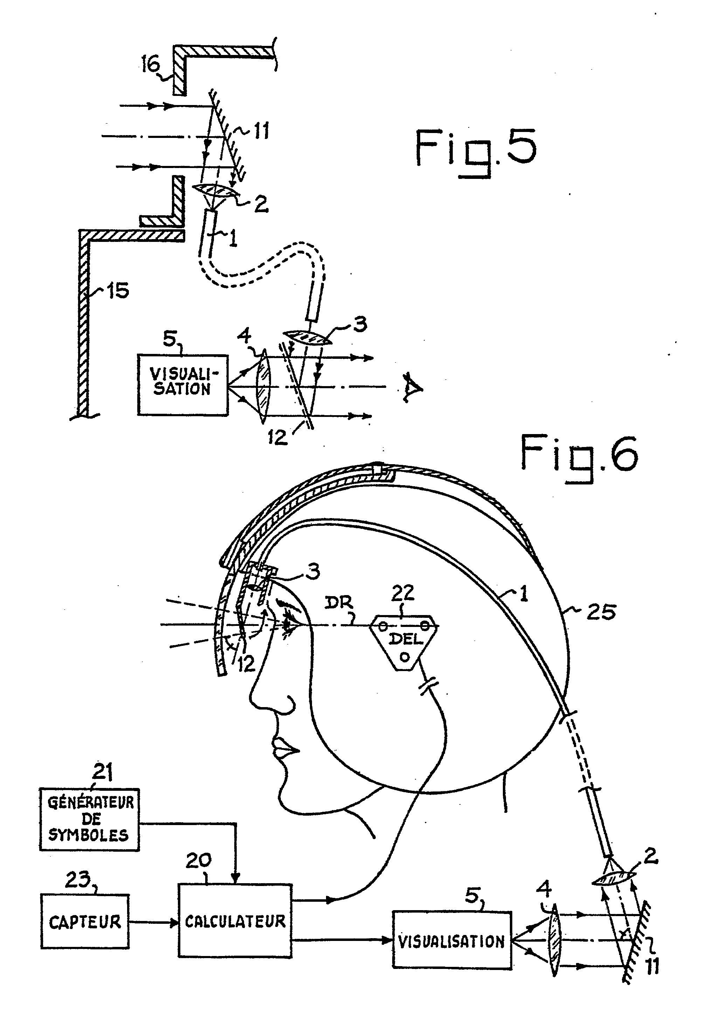

En se reportant à la figure 1, le dispositif de transport d'images lumineuses comporte, de manière connue, le faisceau ordonné de fibres optiques 1, un objectif optique d'entrée 2 et un objectif optique de sortie 3. Les axes optiques ZE et ZS des objectifs 2 et 3 sont perpendiculaires aux faces planes d'extrémité du câble optique 1, respectivement à la face d'entrée FE et à la face de sortie FS. L'objectif 2 effectue la mise au point de l'image à transporter sur le plan de la face d'entrée FE. L'image lumineuse est reproduite de manière identique côté face de sortie FS puisque le câble est ordonné. L'optique 3 assure le passage en rayons parallèles du rayonnement diffusé par chaque extrémité de fibres du plan FS pour en permettre l'observation visuelle. On considère, de manière analogue, que le rayonnement reçu sur l'objectif 2 est un rayonnement parallèle et que la lentille 2 assure la focalisation dans le plan de la face d'entrée. Le rayonnement incident est bien sous forme de rayons parallèles dans le cas d'une scène extérieure (figure 5) ; dans le cas d'une image lumineuse située à courte distance comme représenté, un objectif optique 4 assure le passage en rayons parallèles. L'élément 5 représente par exemple un tube de visualisation d'image.

Conformément à l'invention, on introduit dans le montage des optiques holographiques, un premier élément optique holographique 11 qui précède l'objectif d'entrée et qui joue le rôle d'un miroir réfléchissant. Côté sortie, en aval de l'objectif 3, on a placé un deuxième élément optique holographique 12 qui joue le rôle d'un miroir partiellement transparent. Ces miroirs 11 et 12 sont respectivement inclinés de même manière sur les axes d'entrée ZE et de sortie ZS. Le miroir 11 réfléchit le rayonnement correspondant à une première image vers l'objectif 2, ce rayonnement étant sous forme d'un faisceau parallèle. Côté sortie, de manière inverse, le miroir 12 réfléchit le rayonnement parallèle issu de l'objectif 3 et laisse passer le rayonnement RE provenant d'une deuxième image (Figure 5), ou du paysage extérieur. Le rayonnement RE est également sous forme de rayons parallèles. Ainsi les deux images se trouvent combinées par l'élément holographique 12 et peuvent être observés directement. On peut aussi, dans le cas d'une observation indirecte, focaliser ces rayonnements avec une optique 6 vers un tube ou une matrice de prise de vue d'image vidéo 7, comme le montre la figure 2.

La figure 3 illustre l'effet dispersif dû au miroir holographique d'entrée. Le rayonnement incident provenant d'un point F de l'image est dévié par le miroir 11 de manière différente en fonction de sa longueur d'onde et va de ce fait, après focalisation par l'objectif 2, tomber sur plusieurs fibres de la face d'entrée.

La configuration représentée figure 1 correspond plus particulièrement à l'utilisation d'un tube cathodique de visualisation 5 qui possède une étendue spectrale faible tandis que le spectre de la deuxième image correspond au paysage extérieur et recouvre tout le spectre visible. La bande spectrale du tube cathodique 5 se situe aux alentours du vert et elle est par exemple centrée sur la longueur d'onde 5460Å , la largeur BS de la bande spectrale étant d'environ ± 35Angstroms autour de cette longueur d'onde. Cette courbe de réponse est représentée sur la figure 4-A. La figure 4-B représente, de manière homologue, la courbe de réponse cette fois à la transmission du miroir holographique 12, étant entendu que celui-ci présente la même courbe que le miroir 11 à la réflexion. On se rend compte que la transmission du spectre visible est assurée excepté pour les longueurs d'onde de la petite bande BS qui sont elles réfléchies par le miroir 12. Ainsi les dispersions produites par le miroir d'entrée 11 et qui, dans le cas d'une utilisation seule de cet élément holographique constitueraient des aberrations chromatiques gênantes, sont utilisées pour éliminer l'effet de trame du câble optique ordonné, et elles sont éliminées en sortie par le miroir holographique 12 qui présente la même fonction réflectrice que celui d'entrée et qui produit l'effet inverse. Il y a lieu de remarquer également que la réflexion du faisceau s'effectue avec un angle d'incidence $i_1$ et un angle de réflexion $i_2$, ces angles pouvant être quelconques et différents. On retrouve les mêmes valeurs en sortie mais inversées, l'angle $i_2$ étant celui d'incidence et l'angle $i_1$ celui de sortie, l'inclinaison des miroirs 11 et 12 étant faite de même manière sur les axes optiques ZE et ZS correspondants. Les angles $i_1$ et $i_2$ pouvant être choisis à gré, il s'ensuit que l'angle $i_2$ peut être de plus faible valeur que $i_1$ comme représenté ce qui permet d'utiliser des optiques 2 et 3 associées au câble 1, de faible diamètre et ce qui permet également dans le cas d'une observation visuelle comme représentée de rapprocher fortement l'oeil de l'optique de combinaison 12.

La figure 5 montre une variante de réalisation qui correspond inversement à avoir comme première image celle du paysage extérieur et comme seconde image, celle d'un tube cathodique de visualisation. Le montage est semblable, les éléments 5 et 4 étant reportés du côté de la sortie pour constituer la deuxième image transmise à travers le miroir 12 vers l'observateur. Dans cette configuration les éléments optiques présentent cette fois à la réflexion la réponse spectrale indiquée sur la figure 4-B tandis que la réponse spectrale figure 4-A correspond à celle de la transmission à travers le miroir 12. L'ensemble ainsi agencé peut être utilisé dans des configurations où l'on ne dispose pas d'une vision directe du paysage extérieur, par exemple dans le cas d'épiscopes pour chars, l'observateur étant situé à l'intérieur de l'enceinte 15 du char et la vision extérieure s'effectuant à travers des trous aménagés dans la tourelle 16. On conçoit encore d'autres domaines d'applications pour ce montage tel que de la surveillance à distance de zones difficiles d'accès, la partie terminale du câble 1 avec les éléments 2 et 11 associés pouvant être déplacée ou positionnée dans une zone à surveiller laquelle peut se situer, par exemple, dans un réacteur nucléaire.

La figure 6 représente une application à un viseur de casque du dispositif selon la figure 1. Le câble optique 1 est de longueur suffisante pour être couplé par son entrée à un dispositif de visualisation cathodique 5 placé à distance et non supporté par le casque 25. La partie terminale opposée est fixée au casque groupant l'objectif 3 et le miroir 12 qui peuvent être réalisés sous de faibles dimensions. Le miroir 12 peut être conçu rabattable de manière à ne plus être ôté du champ optique d'observation durant des phases de non utilisation. Les autres éléments représentés comportent un calculateur de bord 20 et un générateur de symboles 21 qui permettent de produire une visualisation d'image synthétique sur l'écran du tube 5. Les autres éléments sont constitués par un ensemble de diodes électroluminescentes 22 et par un capteur photosensible 23 pour faire le repérage de direction d'un axe lié au casque 25, par exemple la direction DR de visée du pilote. Un dispositif de repérage de direction de ce type est décrit dans le brevet français n°2 399 033.

Les dispositifs conformes à l'invention qui viennent d'être décrits utilisent les propriétés des hologrammes par réflexion pour ramener à un seul élément optique le moyen de dispersion placé en sortie et celui de combinaison d'images. De plus, cet élément holographique de sortie compense parfaitement les aberrations chromatiques introduites par le premier élément holographique d'entrée.

Les avantages présentés par rapport aux solutions antérieures sont répertoriés ci-après :
- réduction du nombre des éléments et gain en poids;
- encombrement plus faible par diminution de la distance L (figure 1) prise par le miroir de sortie 12 devant l'oeil de l'observateur sur la direction de visée Z'S, ceci étant dû aux propriétés des miroirs holographiques qui permettent de choisir de manière arbitraire les valeurs des angles $i_1$ et $i_2$ ;
- amélioration du multiplexage en fréquence, en effet le pouvoir de dispersion de l'hologramme est beaucoup plus important que celui d'un prisme et le transport de l'information relative à un point de l'image s'effectue en répartissant les différentes composantes chromatiques sur un plus grand nombre de fibres ; la rupture d'une fibre n'en devient que moins grave et la perte en luminosité occasionnée par cette cassure est diminuée par un facteur important;
- gain en luminance sur l'image visualisée puisqu'un miroir holographique possède un coefficient de réflexion proche de 100% pour une bande spectrale identique à celle du tube tandis que la transmission totale sur tout le spectre avoisine 80% contre 50% environ dans le cas d'un miroir classique de combinaison ;
- absence de trame dans la visualisation représentée. L'invention permet donc d'améliorer tout système de présentation utilisant un transport d'images à faisceau ordonné de fibres optiques. Elle permet une augmentation du contraste et une meilleure insensibilité à la dégradation des fibres. De plus, elle accroît la compacité et la légèreté du matériel. Elle diminue en outre le nombre des éléments nécessaires à la présentation d'une image après multiplexage en fréquence. Elle permet en outre de compenser les défauts de chromatisme de grandeur d'un composant holographique imageur.

Il est entendu que les variantes de réalisation conformes aux caractéristiques décrites sont incluses dans l'invention. A titre indicatif, le renvoi d'axe optique effectué aussi bien par le miroir 11 à l'entrée que par le miroir 12 en sortie peut-être choisi avec une valeur angulaire différente de celle d'angle droit représentée sur les figures 1 à 3. Cet angle peut être aigu comme le montre les figures 5 et 6, ou obtus.

**Revendications**

1. Dispositif de transport et de combinaison d'images lumineuses, dans lequel le transport d'une première image lumineuse est assuré à l'aide d'un câble optique (1) formé par un faisceau ordonné de fibres optiques terminé par deux faces planes d'extrémité, une face d'entrée (FE) et une face de sortie (FS), un objectif d'entrée (2) formant ladite première image à transporter sur la face d'entrée, et un objectif de sortie (3) reprenant l'image formée sur la face de sortie pour en permettre l'observation, des moyens comprenant un premier élément optique en amont de l'objectif d'entrée pour disperser le rayonnement reçu en fonction de la longueur d'onde et un deuxième élément optique en aval de l'objectif de sortie pour fusionner de manière inverse le rayonnement sortant et reformer ladite première image, le dispositif étant caractérisé en ce que les éléments optiques de dispersion sont réalisés par deux optiques holographiques, le premier élément (11) formant un miroir réfléchissant pour réfléchir un première bande spectrale déterminée correspondant à ladite première image, les aberrations chromatiques dudit premier élément produisant ladite dispersion; le deuxième élément (12) formant un miroir partiellement transparent pour d'une part, réfléchir le rayonnement correspondant à ladite première bande spectrale et supprimer lesdites aberrations et pour d'autre part, transmettre le rayonnement correspondant à une deuxième bande spectrale correspondant à une deuxième image à combiner avec la première, ladite deuxième bande ne comportant pas de longueur d'onde de ladite première bande.

2. Dispositif selon la revendication 1, caractérisé en ce que la première image est produite par un dispositif de visualisation (5) dont le spectre est réduit à une bande spectrale faible, délimitée du spectre visible, ladite première image étant reprise par un objectif (4) pour être transmise sous forme de rayons parallèles à la première optique holographique (11), et que ladite deuxième image correspond à la vision du paysage extérieur à travers le deuxième élément holographique (12).

3. Dispositif selon la revendication 2, caractérisé en ce que le premier élément holographique (11) présente une réflexion limitée au rayonnement inclus dans la bande spectrale (BS) correspondant à ladite première image, que le deuxième élément optique (12) présente à la réflexion la même caractéristique de réponse que le premier élément holographique et qu'il présente à la transmission une réponse dans tout le spectre visible excepté dans ladite bande délimitée (BS).

4. Dispositif selon l'une quelconque des revendications précédentes, caractérisé en ce que le rayonnement issu du deuxième élément holographique (12) par réflexion et par transmission est repris par un objectif optique (6) qui le focalise sur un dispositif de prise de vue d'image vidéo (7).

5. Dispositif selon la revendication 1 ou selon l'ensemble 1 et 4, caractérisé en ce que ladite première image correspond à la vision du paysage extérieur et la deuxième image correspond à la vision d'une image produite par un dispositif de visualisation (5) qui présente un spectre réduit d'émission, le rayonnement correspondant à la première image étant reçu directement sous forme de rayons parallèles par le premier élément optique holographique (11), le rayonnement correspondant à ladite deuxième image étant produit par le dispositif de visualisation qui est suivi d'un objectif optique (4) pour le produire sous forme de rayons parallèles à l'entrée du deuxième élément holographique (12).

6. Dispositif selon l'une quelconque des revendications 1 à 3, utilisé sur un viseur de casque, caractérisé en ce que le deuxième élément holographique (12) et l'optique de sortie (3) sont portés par le casque (25) ainsi qu'une première l'extrémité du câble optique (1) lequel est couplé par sa deuxième extrémité à des éléments placés à distance et non solidaires du casque groupant l'optique de sortie (2), le premier élément optique holographique (11) et des moyens générateurs de ladite première image (4, 5, 20 et 21).

**Claims**

1. A device for conveying and combining light images, in which the conveyance of a first image is ensured by means of an optical cable (1) formed by a defined bundle of optical fibers having two plane end faces, one being an input face (FE) and the other being an output face (FS), an input lens (2) forming said first image to be conveyed to the input face, and an output lens (3) taking over the image formed on the output face for enabling its observation, means being provided for suppressing the screen effect, said means comprising a first optical element disposed upstream of the input lens for dispersing the radiation received as a function of the wave length, and a second optical element disposed downstream of the output lens for merging in an inverse manner the output radiation and for reconstituting said first image, the device being characterized in that the optical dispersion elements are constituted by two holographic optical elements, the first element (11) constituting a mirror for reflecting a first defined spectrum bandwidth which corresponds to said first image, the chromatic aberrations of said first element causing said dispersion, whereas the second element (12) constitutes a partially transparent mirror for reflecting the radiation which corresponds to said first spectrum bandwidth and for suppressing said aberrations, on the one hand, and for conveying the radiation, which corresponds to a second spectrum bandwidth corresponding in turn to a second image to be combined with the first one, on the other hand, said second bandwidth excluding the wave lengths of said first bandwidth.

2. A device according to claim 1, characterized in that the first image is produced by a display device (5) whose spectrum is reduced to a small spectrum bandwidth, delimited against the visible spectrum, said first image being taken over by a lens (4) for being conveyed as parallel beams to the first holographic optical element (11), and that said second image corresponds to the view of the external landscape seen through the second holographic element (12).

3. A device according to claim 2, characterized in that the first holographic elements (11) exhibits a reflection limited to the radiation included in the spectrum bandwidth (BS) which corresponds to said first image, that the second optical element (12) exhibits the same characteristics of response versus the reflection as does the first holographic element and that it provides a response to the transmission covering the entire visible spectrum, except said delimited bandwidth (BS).

4. A device according to any one of the preceding claims, characterized in that the radiation transmitted from the second holographic element (12) by way of reflection and transmission is taken over by an optical lens (6), which focusses the radiation onto a video image pick-up device (7).

5. A device according to claim 1 or the claims 1 and 4, characterized in that said first image corresponds to the vision of the external landscape and the second image corresponds to the vision of an image produced by a display device (5), which has a reduced transmission spectrum, the radiation corresponding to the first image being received directly as parallel beams by the first holographic optical element (11), with the radiation corresponding to said second image being produced by the display device, to which is output-connected an optical lens (4) for producing the radiation at the input of the second holographic element (12) in the form of parallel beams.

6. A device according to any one of claims 1 to 3, used in a helmet sighting, characterized in that the second holographic element (12) and the output lens (3) are supported by the helmet (25) as well as a first end of the optical cable (1), which is coupled via its second end to remotely placed elements which may be removed from the helmet and comprise the output lens (2), the first holographic optical element (11) and the means for generating said first image (4, 5, 20 and 21).

**Patentansprüche**

1. Vorrichtung zur Weiterleitung und Kombination von Lichtbildern, bei der die Weiterleitung eines ersten Lichtbildes mit Hilfe eines optischen Kabels (1) erfolgt, das aus einem geordneten Bündel von Lichtleitfasern mit zwei ebenen Endflächen, einer Eintrittsfläche (FE) und einer Austrittsfläche (FS), besteht, wobei ein Eintrittsobjektiv (2) das erste auf die Eintrittsfläche weiterzuleitende Bild erzeugt und ein Austrittsobjektiv (3) das auf der Austrittsfläche erzeugte Bild zum Zweck der Betrachtung übernimmt, und wobei Mittel zur Unterdrückung des Rastereffekts vorgesehen sind, die ein erstes optisches Element vor dem Eintrittsobjektiv zur Dispersion der empfangenen Strahlung in Abhängigkeit von der Wellenlänge und ein zweites optisches Element hinter dem Austrittsobjektiv zur Vereinigung der austretenden Strahlung in umgekehrter Weise und zur Wiederherstellung des ersten Bildes aufweisen, dadurch gekennzeichnet, daß die optischen Dispersionselemente aus zwei holographischen Objekten bestehen, von denen das erste Element (11) ein Reflexionsspiegel zum Reflektieren eines ersten festgesetzten, dem ersten Bild entsprechenden ersten Spektralbandes bildet, wobei die chromatischen Aberrationen des ersten Elements die Dispersion verursachen, während das zweite Element (12) einen teilweise durchscheinenden Spiegel bildet, der zum einen die dem ersten Spektralband entsprechende Strahlung reflektiert und die genannten Aberrationen unterdrückt, und zum andern die dem zweiten Spektralband entsprechende Strahlung durchläßt, die wiederum einem zweiten mit dem ersten zu kombinierenden Bild entspricht, wobei das zweite Band keine Wellenlänge des ersten Bandes aufweist.

2. Vorrichtung nach Anspruch 1, dadurch gekennzeichnet, daß das erste Bild von einer Sichtvorrichtung (5) erzeugt wird, deren Spektrum auf ein schmales, gegen das sichtbare Spektrum abgegrenztes Spektralband reduziert ist, wobei das erste Bild von einem Objektiv (4) zur Weiterleitung in Form von parallelen Strahlen an die erste holographische Optik (11) übernommen wird, und daß das zweite Bild der Ansicht der äußeren Landschaft durch das zweite holographische Element (12) entspricht.

3. Vorrichtung nach Anspruch 2, dadurch gekennzeichnet, daß das erste holographische Element (11) eine Reflexion bewirkt, die auf die im Spektralband (BS) entsprechend dem ersten Bild enthaltene Strahlung beschränkt ist, daß das zweite optische Element (12) bezüglich der Reflexion die gleiche Verhaltenscharakteristik zeigt wie das erste holographische Element, und daß es über den ganzen Bereich sichtbaren Lichts durchlässig ist, mit Ausnahme des begrenzten Spektralbands (BS).

4. Vorrichtung nach einem beliebigen der vorhergehenden Ansprüche, dadurch gekennzeichnet, daß die aus dem zweiten holographischen Element (12) per Reflexion und per Durchlaß austretende Strahlung durch ein optisches Objektiv (6) aufgenommen wird, das sie auf eine Videobildaufnahmevorrichtung (7) fokussiert.

5. Vorrichtung nach Anspruch 1 oder nach den Ansprüchen 1 und 4, dadurch gekennzeichnet, daß das erste Bild der Ansicht der äußeren Landschaft und das zweite Bild der Ansicht eines von der Sichtvorrichtung erzeugten Bildes entspricht, die ein reduziertes Strahlungsspektrum besitzt, wobei die dem ersten Bild entsprechende Strahlung vom ersten holographischen optischen Element (11) direkt in Form von parallelen Strahlen empfangen wird, während die dem zweiten Bild entsprechende Strahlung durch die Sichtvorrichtung erzeugt wird, an die sich ein Lichtobjektiv (4) zur Erzeugung des Bildes in Form von parallelen Strahlen am Eintritt des zweiten holographischen Elements (12) anschließt.

6. Vorrichtung nach einem beliebigen der Ansprüche 1 bis 3, verwendet als Helmvisier, dadurch gekennzeichnet, daß das zweite holographische Element (12) und die Austrittsoptik (3) zusammen mit einem ersten Ende des optischen Kabels (1) vom Helm (25) getragen werden, während das zweite Ende des Kabels mit Elementen verbunden ist, die im Abstand und losgelöst vom Helm angebracht sind und die Austrittsoptik (2), die erste holographische Optik (11) und die Mittel zur Erzeugung des ersten Bilds (4, 5, 20 und 21) umfassen.

Fig.1

Fig.2

Fig.3

Fig.4

Fig.5

Fig.6